# NEUE EUROPÄISCHE PATENTSCHRIFT

(11) **EP 3 479 183 B2**
(45) Veröffentlichungstag und Bekanntmachung des Hinweises auf die Entscheidung über den Einspruch: **04.01.2023**
(45) Hinweis auf die Patenterteilung: 25.03.2020
(21) Anmeldenummer: 17780317.8
(22) Anmeldetag: 18.09.2017
(51) Int. Cl.: B62D 15/02, B60W 30/06, G05D 1/02, G01C 21/36, G01C 21/34

(54) **VERFAHREN ZUM BETRIEB EINES KRAFTFAHRZEUGS IN EINER NAVIGATIONSUMGEBUNG UND KRAFTFAHRZEUG**
METHOD FOR OPERATING A MOTOR VEHICLE IN A NAVIGATION ENVIRONMENT AND MOTOR VEHICLE
PROCÉDÉ DE FONCTIONNEMENT D'UN VÉHICULE À MOTEUR DANS UN ENVIRONNEMENT DE NAVIGATION ET VÉHICULE À MOTEUR

(30) Priorität: 13.10.2016 DE 102016219987
(43) Veröffentlichungstag der Anmeldung: 08.05.2019
(73) Patentinhaber: Audi AG, 85045 Ingolstadt (DE)
(72) Erfinder: SCHULLER, Florian, 85737 Ismaning (DE)
(86) Internationale Anmeldenummer: PCT/EP2017/073457
(87) Internationale Veröffentlichungsnummer: WO 2018/068992

(56) Entgegenhaltungen:
- DE-A1-102013 205 840
- DE-A1-102014 015 075
- DE-A1-102016 003 261
- DE-B3-102014 013 208
- US-A1- 2013 231 824
- US-A1- 2015 344 028

## Beschreibung

Die Erfindung betrifft ein Verfahren zum Betrieb eines Kraftfahrzeugs in einer Navigationsumgebung, die eine Parkumgebung ist, wobei eine digitale, ein Fahrwegenetz beschreibende Navigationskarte der Navigationsumgebung verwendet und eine Navigationsroute zu einer in der Navigationskarte enthaltenen Zielposition unter Berücksichtigung der Navigationskarte durch ein Navigationssystem des Kraftfahrzeugs ermittelt wird, wobei das Umfeld des Kraftfahrzeugs beschreibende Sensordaten mittels einer kraftfahrzeugseitigen Sensoreinrichtung erfasst werden. Daneben betrifft die Erfindung ein Kraftfahrzeug.

Kraftfahrzeuge werden häufig in örtlich begrenzten Navigationsumgebungen betrieben, für die ein klassisches Beispiel Parkumgebungen, insbesondere Parkhäuser oder Parkplätze mit einer Vielzahl von Abstellplätzen, sind. Um den Gesamtverkehr innerhalb der Navigationsumgebung zu verbessern sowie eine bessere Orientierung für Fahrer innerhalb der Navigationsumgebungen zu ermöglichen, ist es bekannt, dem Kraftfahrzeug Navigationskarten für die entsprechende Navigationsumgebung, beispielsweise mittels einer der Navigationsumgebung zugeordneten zentralen Recheneinrichtung zu übermitteln. Da sich das Fahren innerhalb solcher Navigationsumgebungen mitunter anspruchsvoll gestaltet, insbesondere präzise Rangiervorgänge erforderlich sind, wurden bereits Verfahren vorgeschlagen, bei denen das Kraftfahrzeug gestützt auf Sensordaten einer Sensoreinrichtung zumindest zeitweise automatisiert geführt wird.

Aus DE 10 2015 001 631 A1 ist ein Verfahren zum Betrieb eines Kraftfahrzeugs in einer Navigationsumgebung bekannt, wobei eine Navigationskarte der Navigationsumgebung von einer zentralen, der Navigationsumgebung zugeordneten Recheneinrichtung empfangen und eine in der Navigationskarte enthaltenen Zielposition ermittelt wird. Es wird ferner eine Idealtrajektorie von der aktuellen Position des Kraftfahrzeugs zu der Zielposition unter Berücksichtigung der Navigationskarte durch ein Navigationssystem ermittelt und eine aktuelle Position des Kraftfahrzeugs in der Navigationsumgebung nachverfolgt, wobei das Kraftfahrzeug bei einer fahrerseitigen Umschaltbedienaktion auf die Idealtrajektorie und danach auf der Idealtrajektorie geführt wird.

Nachteilig ist daran, dass die zur analytischen Bewertung der Umgebung des Kraftfahrzeugs erforderliche Sensoreinrichtung sehr aufwendig ist. Gerade bei Fahrzeugen im sogenannten Volumensegment ist jedoch nur eine beschränkte Sensorsichtweite und/oder -güte wirtschaftlich realisierbar, die keine vollständige Beurteilung eines erfassten Szenarios für die Umsetzung einer pilotierten Fahrfunktion ermöglicht. Insbesondere reichen die Erfassungsbereiche, die Auflösung und die Performanz typischer Sensoreinrichtungen nicht aus, um eine vollständige analytische Beschreibung aller denkbaren Situation in der Parkumgebung zu realisieren.

Es wurde ferner bereits vorgeschlagen, Techniken des maschinellen Lernens im Bereich der Fahrzeugtechnik anzuwenden:
DE 10 2014 018 913 A1 offenbart ein Verfahren zum Betreiben einer Fahrerassistenzeinrichtung eines Kraftwagens, wobei eine Umgebung des Kraftwagens durch eine zur Fahrerassistenzeinrichtung gehörige Sensoreinrichtung des Kraftwagens und zumindest eine Handlung eines Fahrers des Kraftwagens, welche mit einer Fahrbewegung des Kraftwagens in Zusammenhang steht, durch eine zur Fahrerassistenzeinrichtung gehörige weitere Sensoreinrichtung des Kraftwagens erfasst werden. Ferner wird eine Korrelation zwischen der erfassten Umgebung und der erfassten Handlung durch die Fahrerassistenzeinrichtung über ein wiederholtes Erfassen von der Umgebung und der Handlung erlernt und eine Verlässlichkeit der erlernten Korrelation mittels eines Gütemaßes durch die Fahrerassistenzeinrichtung bewertet, wonach zumindest eine automatisierten Funktion, welche mit einer Fahrbewegung des Kraftwagens in Zusammenhang steht, durch die Fahrerassistenzeinrichtung in Abhängigkeit der augenblicklichen Umgebung des Kraftwagens und/oder eines Wertes des Gütemaßes durchgeführt wird.
DE 10 2011 112 990 A1 offenbart ein System zur Steuerung und Regelung von Fahrzeugen, um voll- oder teilautomatische Fahrten durchzuführen, wobei Daten aus einer Erfahrungsdatei entnommen werden, also Strecken befahren werden, die schon einmal befahren wurden, und dabei die Daten zu allen erforderlichen Lenk-, Brems-, Geschwindigkeitsansteuerungen aus dieser Erfahrungsdatei entnommen werden.
DE 10 2005 047 591 A1 offenbart ein Verfahren zur Entlastung des Fahrers bei der Bedienung eines Kraftfahrzeugs mit einer Vielzahl von Fahrerassistenzsystemen zur Durchführung einer Vielzahl unterschiedlicher Fahrmanöver sowie Mitteln zur Gewinnung von Situationsdaten zur Beschreibung der aktuellen Fahrsituation, wobei Situationsdaten durch das Kraftfahrzeug gewonnen und anhand der Situationsdaten eine begrenzte Menge situationsgerechter Fahrmanöver durch das Kraftfahrzeug bestimmt werden, wonach eine Einigung zwischen Kraftfahrzeug und Fahrer auf die Ausführung eines einzigen situationsgerechten Fahrmanövers erfolgt.

Der Erfindung liegt mithin die Aufgabe zugrunde, eine demgegenüber verbesserte Möglichkeit zum Betreiben eines Kraftfahrzeugs in einer Navigationsumgebung, insbesondere einer Parkumgebung, anzugeben.

Zur Lösung dieser Aufgabe sind erfindungsgemäß bei einem Verfahren der eingangs genannten Art die Merkmale des Anspruchs 1 vorgesehen.

Die Erfindung beruht auf der Überlegung, maschinelles Lernen zur Realisierung der automatisierten Fahrzeugbewegung in Quer- und/oder Längsrichtung zu verwenden, wobei ein anhand von historischen Sensordaten, insbesondere der Sensoreinrichtung oder einer Sensoreinrichtung eines anderen Kraftfahrzeugs, trainierter Fahrzeugführungsalgorithmus zum Einsatz kommt. Mit Vorteil kann so auf die aufwändige Ausgestaltung der Sensoreinrichtung für eine vollständige analytische Situationsinterpretation verzichtet und eine automatisierte Führungsfunktion in der Navigationsumgebung, insbesondere in Park- und Rangierszenarien, bereits bei Kraftfahrzeugen mit einer verhältnismäßig einfach ausgelegten Sensoreinrichtung realisiert werden.

Im Rahmen des erfindungsgemäßen Verfahrens kann die Navigationseinrichtung in einem ersten Schritt mittels einer kraftfahrzeugseitigen Kommunikationseinrichtung die Navigationskarte von einer zentralen, der Navigationsumgebung zugeordneten Recheneinrichtung empfangen. Eine solche Recheneinrichtung kann beispielsweise ein Backendserver sein. Selbstverständlich ist es alternativ auch denkbar, dass die Navigationskarte bereits in dem Kraftfahrzeug vorliegt, beispielsweise im Sinne einer Pufferung für befahrene Gebiete. In einem weiteren Schritt kann die Navigationseinrichtung die Zielposition, beispielsweise einen Stellplatz für das Kraftfahrzeug, selbst ermitteln, durch eine Nutzerauswahl erhalten oder eine von der Recheneinrichtung ermittelte Zielposition empfangen. Im Anschluss kann die Recheneinrichtung die Navigationsroute unter Berücksichtigung der Navigationskarte ermitteln. Parallel dazu kann das Navigationssystem den Fahrzeugführungsalgorithmus ausführen, welcher die Eingangsdaten auswertet. Die dem Training des Fahrzeugführungsalgorithmus zugrundeliegenden Trainingsdaten umfassen Korrelationen zwischen Sensordaten und einem Verhaltensmuster in Form einer Quer- und/oder Längsbewegungsaktion. Eine denkbare Ausgestaltung des Fahrzeugführungsalgorithmus ist beispielsweise ein Deep Neuronal Network, wie es aus dem Projekt "Deep Driving" der Princeton University bekannt ist (vgl. C. Chen, A. Seff, A. Kornhauser und J. Xiao: DeepDriving: Learning Affordance for Direct Perception in Autonomous Driving, The IEEE International Conference on Computer Vision (ICCV), 2015, pp. 2722-2730). Wenn oder sobald die automatische Führung gemäß der ermittelten Quer- und/oder Längsführungsaktion aktiviert ist, kann das Navigationssystem durch Ansteuerung wenigstens einer Lenkeinrichtung und/oder einer Antriebseinrichtung und/oder einer Bremseinrichtung des Kraftfahrzeugs die automatische Führung gemäß der ermittelten Quer- und/oder Längsführungsaktion realisieren.

Es wird bei dem erfindungsgemäßen Verfahren besonders bevorzugt, wenn ein Fahrzeugführungsalgorithmus verwendet wird, der, insbesondere werksseitig, anhand von Bewegungen des oder eines Kraftfahrzeugs innerhalb wenigstens einer Referenznavigationsumgebung beschreibenden Trainingsdaten trainiert wurde. Die Trainingsdaten können mithin während wenigstens einer Fahrt des oder eines Kraftfahrzeug in einer Referenznavigationsumgebung erfasst werden, beispielsweise im Rahmen einer Trainingsfahrt, und/oder auch eine bekannte "Ground Truth", insbesondere eine Beschreibung befahrbarer und nichtbefahrbarer Bereiche der Referenznavigationsumgebung, umfassen. Dabei wird es bevorzugt, wenn die Trainingsdaten bei einer solchen Trainingsfahrt eines mit dem Kraftfahrzeug, insbesondere hinsichtlich der Sensoreinrichtung, vergleichbaren Referenzkraftfahrzeugs erfasst werden. Bevorzugt wurde der Fahrzeugführungsalgorithmus werksseitig anhand solcher Trainingsdaten trainiert. Damit ist es möglich, durch die Auswahl der Trainingsdaten und/oder die Parametrisierung ein herstellerseitig gewünschtes Fahrverhalten einzuprägen. Es ist zusätzlich möglich, dass das Navigationssystem während der Fahrten des Kraftfahrzeugs selbst weitere Trainingsdaten erhebt und den Fahrzeugführungsalgorithmus fortlaufend anhand dieser Trainingsdaten trainiert wird. Die Datenbasis des Fahrzeugführungsalgorithmus kann dadurch schnell erweitert werden, sei es durch das Training während der Fahrten des Kraftfahrzeugs oder durch einfach einzuspielende Updates basierend auf verbesserten Trainingsdaten.

Zweckmäßigerweise wird ein hinsichtlich der Vermeidung von Kollisionen und/oder der Realisierung einer Bewegung des Kraftfahrzeugs gemäß eines Rechts- oder Linksfahrgebots trainierter Fahrzeugführungsalgorithmus verwendet. Die Trainingsdaten können mithin anhand von Bewegungen in der oder einer Referenznavigationsumgebung gewonnen sein, bei denen durch die Sensordaten beschriebenen Hindernissen durch bestimmte Quer- und/oder Längsbewegungsaktionen ausgewichen und/oder bei denen vor einer Kollision mit solchen Hindernissen angehalten wird. Ebenso kann der Fahrzeugführungsalgorithmus durch das konsequente Befolgen eines Rechts- oder Linksfahrgebots während des Trainings zur Einhaltung eines solchen Gebots trainiert werden.

Es wird besonders bevorzugt, wenn die automatisierte Führung des Kraftfahrzeugs erst nach Erhalt einer fahrerseitigen, einen Wunsch nach der automatischen Führung anzeigenden Bedienaktion begonnen wird. Typischerweise steuert der Fahrer das Kraftfahrzeug zunächst manuell und startet beim Wunsch einer automatisierten Führung durch die Bedienaktion gegenüber einer Eingabeeinrichtung des Kraftfahrzeugs die automatische Führung. Es kann so ein fahrerüberwachtes Navigationssystem realisiert werden, bei dem die Nutzung des Fahrzeugführungsalgorithmus durch einen Verbleib der Verantwortung für den Betrieb des Kraftfahrzeugs beim Fahrer abgesichert ist.

Dabei kann der Fahrzeugführungsalgorithmus während seiner Ausführung in Abhängigkeit der Sensordaten überprüfen, ob die Ermittlung einer künftigen Quer- und/oder Längsführungskation verfügbar ist, und im Fall einer ermittelten Verfügbarkeit ein eine Annahmebereitschaft für die Bedienaktion anzeigender Hinweis an den Fahrer ausgegeben werden. Mit anderen Worten wird der Fahrzeugführungsalgorithmus während der Fahrt, insbesondere nach Erreichen der Navigationsumgebung, im Hintergrund ausgeführt und überprüft, ob die momentan vorliegenden Sensordaten ausreichen, um das Kraftfahrzeug automatisch zu führen. Sobald dies der Fall ist, kann das Navigationssystem eine Ausgabeeinrichtung des Kraftfahrzeugs zur Ausgabe des Hinweises ansteuern. Der Fahrer erhält so stets eine Information über die Verfügbarkeit der automatisierten Führung und kann diese auf Wunsch durch die Bedienaktion aktivieren.

Bei dem erfindungsgemäßen Verfahren ist es ferner von besonderem Vorteil, wenn der Fahrzeugführungsalgorithmus bei Ermittlung mehrerer Möglichkeiten für eine künftige Quer- und/oder Längsführungsaktion, insbesondere für einen Fahrrichtungsentscheid, eine Möglichkeit in Abhängigkeit der Navigationsroute und/oder einer fahrerseitigen, die gewünschte Quer- und/oder Längsführungsaktion anzeigenden Bedienaktion auswählt. Mithin können Mehrdeutigkeiten, die der Fahrzeugführungsalgorithmus allein auf Basis maschinellen Lernens nicht auflösen kann, durch das Einbeziehung von Wissen aus der a priori bekannten Navigationskarte und/oder der Intention des Fahrers aufgelöst werden. Dies verbessert die Kontrollierbarkeit des Betriebs des Navigationssystems erheblich.

Außerdem wird es bei dem erfindungsgemäßen Verfahren bevorzugt, wenn das Navigationssystem einen zusätzlichen, die Sensordaten als Eingangsdaten verwendenden Kollisionsvermeidungsalgorithmus ausführt, welcher bei Erkennung einer bevorstehenden Kollision des Kraftfahrzeugs mit einem Hindernis die Fahrzeugführungsalgorithmusseitig ermittelte Quer- und/oder Längsführungsaktion modifiziert und/oder unterbindet. Mit anderen Worten wird eine redundante Auswertung der Sensordaten auf Basis eines analytischen Kollisionsvermeidungsalgorithmus vorgeschlagen, der, typischerweise ohne eine Situationsinterpretation, die vom Fahrzeugführungsalgorithmus ermittelte Quer- und/oder Längsführungsaktion überstimmen kann. Der Kollisionsvermeidungsalgorithmus wird insbesondere unabhängig von einem Training anhand der Trainingsdaten ausgeführt. Im Rahmen der Durchführung des Kollisionsvermeidungsalgorithmus kann beispielsweise der Abstand zu einem durch die Sensordaten beschriebenen Hindernis ausgewertet werden und bei Unterschreitung eines Grenzwerts die Modifikation und/oder Unterbindung der Quer- und/oder Längsführungsaktion erfolgen. Mit Vorteil kann so ein wesentlich robusterer Betrieb des Navigationssystems realisiert werden.

Zweckmäßigerweise wird bei dem erfindungsgemäßen Verfahren eine wenigstens einen Rohdaten bereitstellenden Sensor umfassende Sensoreinrichtung verwendet, wobei der wenigstens eine Sensor ein Ultraschallsensor und/oder ein Radarsensor und/oder ein Lasersensor und/oder eine Kamera ist und/oder die Sensordaten ein aus den Rohdaten abgeleitetes Umgebungsmodell des Kraftfahrzeugs beschreiben. Rohdaten einzelner Sensoren der Sensoreinrichtung können mithin zum Umgebungsmodell fusioniert werden, wobei geeignete Fusions- und Transformationsalgorithmen aus dem Stand der Technik an sich bekannt sind. Besonders bevorzugt bildet das Umgebungsmodell die Umgebung des Kraftfahrzeugs aus der Vogelperspektive (Topview) ab.

Schließlich ist es bei dem erfindungsgemäßen Verfahren vorteilhaft, wenn die automatische Führung des Kraftfahrzeugs mit Erreichen der Zielposition und/oder bei einer fahrerseitigen, einen Beendigungswunsch der automatischen Führung anzeigenden Bedienaktion beendet wird. Diese Bedienaktion kann ebenfalls über die oder eine Eingabeeinrichtung des Kraftfahrzeugs erfasst werden.

Die der Erfindung zugrunde liegende Aufgabe wird außerdem erfindungsgemäß gelöst durch ein Kraftfahrzeug, aufweisend ein zur Durchführung des erfindungsgemäßen Verfahrens ausgebildetes Navigationssystem. Sämtliche Ausführungen zum erfindungsgemäßen Verfahren lassen sich analog auf das erfindungsgemäße Kraftfahrzeug übertragen, so dass auch mit diesem die zuvor genannten Vorteile erzielt werden können.

Weitere Vorteile und Einzelheiten der Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze eines erfindungsgemäßen Kraftfahrzeugs; und
- Fig. 2: ein Flussdiagramm des erfindungsgemäßen Verfahrens.

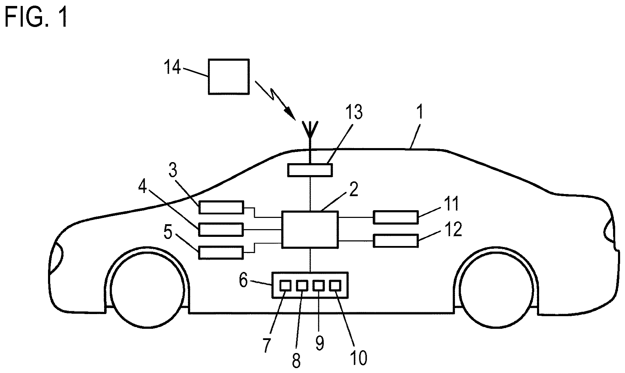

Fig. 1 zeigt eine Prinzipskizze eines Kraftfahrzeugs 1, umfassend ein Navigationssystem 2, mittels welches eine Lenkeinrichtung 3, eine Antriebseinrichtung 4 und eine Bremseinrichtung 5 des Kraftfahrzeugs 1 zur Durchführung von Quer- und Längsführungsaktionen ansteuerbar sind. Das Navigationssystem 2 erhält Sensordaten einer Sensoreinrichtung 6 des Kraftfahrzeugs 1, welche ein Umgebungsmodell beschreiben. Dazu umfasst die Sensoreinrichtung 6 mehrere das Umfeld des Kraftfahrzeugs erfassende Ultraschallsensoren 7, Radarsensoren 8, Lasersensoren 9 und Kameras 10, deren Rohdaten zum Umgebungsmodell fusioniert werden.

Daneben sind kraftfahrzeugseitig eine Eingabeeinrichtung 11, mittels welcher ein Fahrer des Kraftfahrzeugs 1 vom Navigationssystem 2 erfassbare Be-dienaktionen, beispielsweise durch manuelle Eingabe und/oder Spracheingabe, vornehmen kann, und eine Ausgabeeinrichtung 12 zur visuellen und/oder akustischen und/oder haptischen Ausgabe von Hinweisen an den Fahrer vorgesehen. Mittels einer Kommunikationseinrichtung 13 des Kraftfahrzeugs 1 sind Daten von und zu einer kraftfahrzeugexternen Recheneinrichtung 14 übertragbar. Diese ist ein einer Navigationsumgebung in Form einer Parkumgebung zugeordneter Backendserver und unterstützt das Kraftfahrzeug 1 bei der Navigation innerhalb der Parkumgebung.

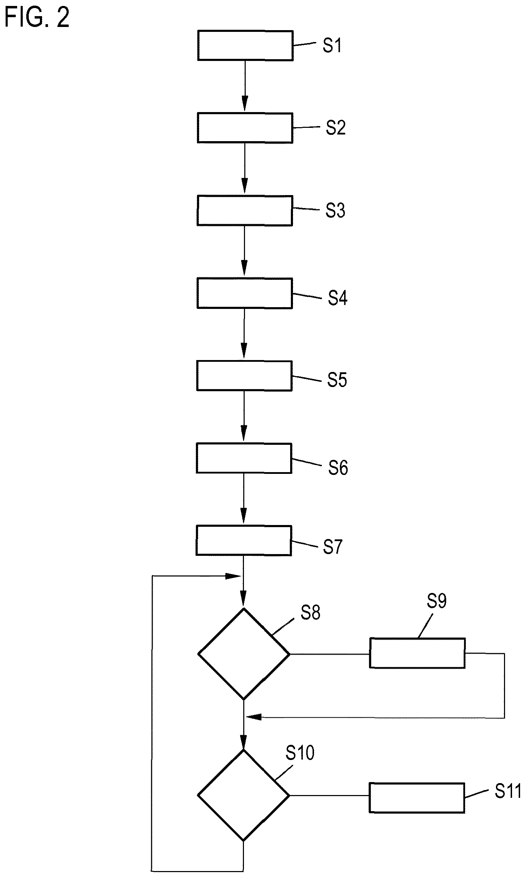

Fig. 2 zeigt ein Flussdiagramm eines Verfahrens zum Betreiben des Kraftfahrzeugs 1 in der Parkumgebung, wobei das Navigationssystem 2 zur Durchführung dieses Verfahrens ausgebildet ist.

In einem Schritt S1, beispielsweise beim Passieren einer Zufahrt zur Parkumgebung, empfängt die Kommunikationseinrichtung 13 von der Recheneinrichtung 14 eine hochgenaue, digitale Navigationskarte der Parkumgebung, welche befahrbare und nicht befahrbare Bereiche beschreibt, und stellt diese dem Navigationssystem 2 bereit.

In einem folgenden Schritt S2 ermittelt das Navigationssystem 2 eine in der Navigationskarte enthaltene Zielposition. Dazu kann ein Fahrer des Kraftfahrzeugs 1 über die Eingabeeinrichtung 11 eine Auswahl aus mehreren möglichen Zielpositionen treffen, eine von der Recheneinrichtung 14 vergebene Zielposition mittels der Kommunikationseinrichtung 13 abgerufen werden oder eine geeignete Zielposition durch das Navigationssystem 2 selbst ermittelt werden. Typischerweise ist diese Zielposition ein Stellplatz, an dem das Kraftfahrzeug 1 abgestellt werden soll.

In einem Schritt S3 ermittelt die Navigationseinrichtung 2 eine Navigationsroute zur Zielposition unter Berücksichtigung der Navigationskarte.

In einem Schritt S4 wird ein Fahrzeugführungsalgorithmus gestartet und durch das Navigationssystem 2 ausgeführt. Dieser Fahrzeugführungsalgorithmus verwendet die von der Sensoreinrichtung 6 bereitgestellten Sensordaten als Eingangsdaten und wurde anhand von Trainingsdaten mittels maschinellen Lernens trainiert. Dazu wurden während einer Trainingsfahrt mit einem Referenzfahrzeug Sensordaten, die den Sensordaten der Sensoreinrichtung 6 entsprechen, und Quer- und/oder Längsbewegungsaktionen eines Fahrers erfasst und miteinander korreliert. Der Fahrzeugführungsalgorithmus wurde insbesondere hinsichtlich der Vermeidung von Kollisionen und der Realisierung einer Bewegung des Kraftfahrzeugs 1 gemäß einem Rechts- oder Linksfahrgebot trainiert. Sofern Sensordaten ausreichenden Umfangs und ausreichender Qualität als Eingangsdaten für die Fahrzeugführungsalgorithmus vorliegen, ermittelt dieser mögliche Quer- und/oder Längsführungsaktionen für das Kraftfahrzeug 1. Der Fahrzeugführungsalgorithmus überprüft mithin kontinuierlich, ob die Ermittlung einer künftigen Quer-und/oder Längsführungsaktion verfügbar ist.

Ist dies der Fall, steuert das Navigationssystem 2 die Ausgabeeinrichtung 12 in einem Schritt S5 zur Ausgabe eines die Annahmebereitschaft einer Bedienaktion zur Aktivierung einer automatischen Führung des Kraftfahrzeugs 1 gemäß den vom Fahrzeugführungsalgorithmus ermittelten Quer-und/oder Längsführungsaktionen an. Der Fahrer kann mithin von einer manuellen Fahrt auf eine automatisierte, von ihm überwachte Führung mittels des Navigationssystems 2 umschalten.

Erfasst das Navigationssystem 2 über die Eingabeeinrichtung 11 eine einen Wunsch der automatischen Führung anzeigende Bedienaktion des Fahrers, wird in einem Schritt S6 die automatische Führung des Kraftfahrzeugs gemäß der durch den Fahrzeugführungsalgorithmus in Abhängigkeit der Sensordaten ermittelten Quer- und/oder Längsführungsaktionen automatisch entlang der Navigationsroute begonnen.

In einem folgenden Schritt S7 startet des Navigationssystem 2 einen zusätzlichen, die Sensordaten als Eingangsdaten verwendenden Kollisionsvermeidungsalgorithmus, welcher parallel zum Fahrzeugführungsalgorithmus durchgeführt wird und bei Erkennung einer bevorstehenden Kollision des Kraftfahrzeugs 1 mit einem Hindernis die Fahrzeugführungsalgorithmusseitig ermittelte Quer-und/oder Längsführungsaktion modifiziert oder unterbindet. Der Kollisionsvermeidungsalgorithmus realisiert dabei eine herkömmliche, analytische Auswertung der Sensordaten hinsichtlich Hindernissen in der Umgebung des Kraftfahrzeugs 1 und kann bei der Erkennung eines Hindernisses, auf welches der Fahrzeugführungsalgorithmus nicht durch eine entsprechende Quer- und/oder Längsführungsaktion reagiert, in die automatische Führung des Kraftfahrzeugs 1 eingreifen. Der Kollisionsvermeidungsalgorithmus überstimmt mithin bei Bedarf den auf Basis des maschinellen Lernens trainierten Fahrzeugführungsalgorithmus.

Während der automatischen Führung des Kraftfahrzeugs 1 wird in einem Schritt S8 abgefragt, ob der Fahrzeugführungsalgorithmus mehrere Möglichkeiten für eine künftige Quer- und/oder Längsführungsaktion, beispielsweise für ein Fahrrichtungentscheid, ermittelt hat.

Ist dies der Fall, steuert das Navigationssystem 2 die Ausgabeeinrichtung 12 in einem Schritt S9 zur Ausgabe eines weiteren Hinweises an den Fahrer an. Dieser Hinweis fordert den Fahrer zur Auswahl einer der durch den Fahrzeugführungsalgorithmus ermittelten Möglichkeiten für die künftige Quer- und/oder Längsführungsaktion auf. In Abhängigkeit einer folgenden fahrerseitigen, die gewünschte Quer-und/oder Längsführungsaktion anzeigenden Bedienaktion erfolgt dann die weitere automatische Führung des Kraftfahrzeugs 1. Alternativ wählt das Navigationssystem 2 in Abhängigkeit der ermittelten Navigationsroute eine der Möglichkeiten aus und löst so die durch den Fahrzeugführungsalgorithmus festgestellte Mehrdeutigkeit auf.

In einem Schritt S10 wird überprüft, ob eine Beendigungsbedingung für die automatische Führung des Kraftfahrzeugs 1 gegeben ist. Als Beendigungsbedingungen sind das Erreichen der Zielposition und die Erfassung einer fahrerseitigen, einen Beendigungswunsch der automatischen Führung anzeigenden Bedienaktion mittels der Eingabeeinrichtung 11 definiert.

Ist eine solche Beendigungsbedingung erfüllt, wird das Verfahren in einem Schritt S11 beendet. Der Fahrer hat mithin die Möglichkeit, zu jedem Zeitpunkt wieder die Kontrolle über das Kraftfahrzeug 1 von Navigationssystem 2 zu übernehmen. Ist keine der Beendigungsbedingungen erfüllt, erfolgt ein Rücksprung zum Schritt S8, so dass die Überprüfung auf Mehrdeutigkeiten und die Erfüllung einer Beendigungsbedingung kontinuierlich fortgesetzt wird.

Es sei an dieser Stelle zusätzlich angemerkt, dass parallel zu den zuvor genannten Schritten während der manuellen Führung des Kraftfahrzeugs 1 eine Erweiterung der Trainingsdaten für den Fahrzeugführungsalgorithmus erfolgen kann, indem das Fahrverhalten des Fahrers erfasst und mit Sensordaten der Sensoreinrichtung 6 korreliert wird. Auf diese Weise kann der Fahrzeugführungsalgorithmus weiter trainiert und die automatische Führung des Kraftfahrzeugs nach einer Aktivierung des Fahrzeugführungsalgorithmus verbessert werden.

## Patentansprüche

1. Verfahren zum Betrieb eines Kraftfahrzeugs (1) in einer Navigationsumgebung, die eine Parkumgebung ist, wobei eine digitale, ein Fahrwegenetz beschreibende Navigationskarte der Navigationsumgebung verwendet und eine Navigationsroute zu einer in der Navigationskarte enthaltenen Zielposition unter Berücksichtigung der Navigationskarte durch ein Navigationssystem (2) des Kraftfahrzeugs (1) ermittelt wird, wobei das Umfeld des Kraftfahrzeugs (1) beschreibende Sensordaten mittels einer kraftfahrzeugseitigen Sensoreinrichtung (6) erfasst werden,
**dadurch gekennzeichnet,**
**dass** das Navigationssystem (2) einen die Sensordaten als Eingangsdaten verwendenden, anhand von Trainingsdaten, die Korrelationen zwischen Sensordaten und einem Verhaltensmuster in Form einer Quer- und/oder Längsführungsaktion umfassen, mittels maschinellen Lernens trainierten Fahrzeugführungsalgorithmus ausführt und das Kraftfahrzeug (1) zumindest zeitweise gemäß wenigstens einer durch den Fahrzeugführungsalgorithmus in Abhängigkeit der Eingangsdaten ermittelten Quer- und/oder Längsführungsaktion automatisch entlang der Navigationsroute geführt wird.

2. Verfahren nach Anspruch 1,
**dadurch gekennzeichnet,**
**dass** ein Fahrzeugführungsalgorithmus verwendet wird, der, insbesondere werksseitig, anhand von Bewegungen des oder eines Kraftfahrzeugs (1) innerhalb wenigstens einer Referenznavigationsumgebung beschreibenden Trainingsdaten trainiert wurde.

3. Verfahren nach Anspruch 1 oder 2,
**dadurch gekennzeichnet,**
**dass** ein hinsichtlich der Vermeidung von Kollisionen und/oder der Realisierung einer Bewegung des Kraftfahrzeugs (1) gemäß eines Rechts- oder Linksfahrgebots trainierter Fahrzeugführungsalgorithmus verwendet wird.

4. Verfahren nach einem der vorhergehenden Ansprüche,
**dadurch gekennzeichnet,**
**dass** die automatische Führung des Kraftfahrzeugs (1) erst nach Erhalt einer fahrerseitigen, einen Wunsch nach der automatischen Führung anzeigenden Bedienaktion begonnen wird.

5. Verfahren nach Anspruch 4,
**dadurch gekennzeichnet,**
**dass** der Fahrzeugführungsalgorithmus während seiner Ausführung in Abhängigkeit der Sensordaten überprüft, ob die Ermittlung einer künftigen Quer- und/oder Längsführungskation verfügbar ist, und im Fall einer ermittelten Verfügbarkeit ein eine Annahmebereitschaft für die Bedienaktion anzeigender Hinweis an den Fahrer ausgegeben wird.

6. Verfahren nach einem der vorhergehenden Ansprüche,
**dadurch gekennzeichnet,**
**dass** der Fahrzeugführungsalgorithmus bei Ermittlung mehrerer Möglichkeiten für eine künftige Quer- und/oder Längsführungsaktion, insbesondere für einen Fahrrichtungsentscheid, eine Möglichkeit in Abhängigkeit der Navigationsroute und/oder einer fahrerseitigen, die gewünschte Quer- und/oder Längsführungsaktion anzeigenden Bedienaktion auswählt.

7. Verfahren nach einem der vorhergehenden Ansprüche,
**dadurch gekennzeichnet,**
**dass** das Navigationssystem einen zusätzlichen, die Sensordaten als Eingangsdaten verwendende Kollisionsvermeidungsalgorithmus ausführt, welcher bei Erkennung einer bevorstehenden Kollision des Kraftfahrzeugs (1) mit einem Hindernis die Fahrzeugführungsalgorithmusseitig ermittelte Quer- und/oder Längsführungsaktion modifiziert und/oder unterbindet.

8. Verfahren nach einem der vorhergehenden Ansprüche,
**dadurch gekennzeichnet,**
**dass** eine wenigstens einen Rohdaten bereitstellenden Sensor umfassende Sensoreinrichtung (6) verwendet wird, wobei der wenigstens eine Sensor ein Ultraschallsensor (7) und/oder ein Radarsensor (8) und/oder ein Lasersensor (9) und/oder eine Kamera (10) ist und/oder die Sensordaten ein aus den Rohdaten abgeleitetes Umgebungsmodell des Kraftfahrzeugs (1) beschreiben.

9. Verfahren nach einem der vorhergehenden Ansprüche,
**dadurch gekennzeichnet,**
**dass** die automatische Führung des Kraftfahrzeugs (1) mit Erreichen der Zielposition und/oder bei einer fahrerseitigen, einen Beendigungswunsch der automatischen Führung anzeigenden Bedienaktion beendet wird.

10. Kraftfahrzeug, aufweisend ein zur Durchführung eines Verfahrens nach einem der vorhergehenden Ansprüche ausgebildetes Navigationssystem (2).

## Claims

1. Method for operating a motor vehicle (1) in a navigation environment which is a parking environment, wherein a digital navigation map of the navigation environment describing a roadway network is used and a navigation route to a target position contained in the navigation map is determined, taking into consideration the navigation map, by a navigation system (2) of the motor vehicle (1), wherein sensor data describing the environment of the motor vehicle (1) are captured by means of a sensor apparatus on the motor vehicle side,
**characterised in that**
that the navigation system (2) carries out a vehicle-guiding algorithm which uses the sensor data as input data and which is trained on the basis of training data, which include correlations between sensor data and a behavioural pattern in the form of a transverse and/or longitudinal guiding action, by means of machine-based learning, and the motor vehicle (1) is guided at least temporarily automatically along the navigation route according to at least one transverse and/or longitudinal guiding action determined by the vehicle-guiding algorithm as a function on the input data.

2. Method according to claim 1,
**characterised in that**
a vehicle guidance algorithm is used which has been trained, in particular at the factory, with reference to training data describing movements of the or a motor vehicle (1) within at least one reference navigation environment.

3. Method according to claim 1 or 2,
**characterised in that**
a vehicle guidance algorithm is used which is trained with regard to avoiding collisions and/or performing a movement of the motor vehicle (1) in accordance with a requirement to drive on the right-hand side or on the left-hand side of a road.

4. Method according to one of the preceding claims,
**characterised in that**
the automatic guidance of the motor vehicle (1) is only begun after reception of a control action carried out by a driver and indicating a desire for automatic guidance.

5. Method according to claim 4,
**characterised in that**
during its implementation the vehicle guidance algorithm checks, as a function of the sensor data, whether the determination of a future transverse and/or longitudinal guidance action is available, and, in the event of availability being determined, a notification to the driver is output indicating a readiness to accept the control action.

6. Method according to one of the preceding claims,
**characterised in that**
in the event of a plurality of options being determined for a future transverse and/or longitudinal guidance action, in particular for a travel direction decision, one option is selected by the vehicle guidance algorithm on the basis of the navigation route or a control action carried out by a driver and indicating a desired transverse and/or longitudinal guidance action.

7. Method according to one of the preceding claims,
**characterised in that**
the navigation system implements an additional collision avoidance algorithm, which uses the sensor data as input data and modifies and/or prevents the transverse and/or longitudinal guidance action determined by the vehicle guidance algorithm if an imminent collision of the motor vehicle (1) with an obstacle is detected.

8. The method according to one of the preceding claims,
**characterised in that**
a sensor device (6) comprising a sensor providing raw data is used, wherein the at least one sensor is an ultrasonic sensor (7) and/or a radar sensor (8) and/or a laser sensor (9) and/or a camera (10), and/or the sensor data describe an environment model of the motor vehicle (1) derived from the raw data.

9. Method according to one of the preceding claims,
**characterised in that**
the automatic guidance of the motor vehicle (1) is terminated when the target position is reached and/or in the event of a control action which is carried out by a driver and indicates a desire to terminate the automatic guidance.

10. Motor vehicle, comprising a navigation system (2) designed to carry out a method according to one of the preceding claims.

## Revendications

1. Procédé permettant le fonctionnement d'un véhicule à moteur (1) dans un environnement de navigation, qui est un environnement de stationnement, dans lequel est utilisée une carte de navigation numérique, décrivant un réseau routier, de l'environnement de navigation, et un itinéraire de navigation vers une position de destination incluse dans la carte de navigation est déterminé en tenant compte de la carte de navigation par un système de navigation (2) du véhicule à moteur (1), dans lequel les données de capteur décrivant l'environnement du véhicule (1) sont détectées au moyen d'un système capteur (6) du côté du véhicule à moteur,
**caractérisé en ce que,**
le système de navigation (2) exécute un algorithme de guidage de véhicule entraîné au moyen d'un apprentissage machine, utilisant les données de capteur comme données d'entrée, sur la base de données d'entraînement qui comportent des corrélations entre des données de capteur et un modèle de comportement sous la forme d'une action de guidage transversal et/ou longitudinal, et le véhicule à moteur (1) est guidé automatiquement le long de l'itinéraire de navigation, au moins ponctuellement selon au moins une action de guidage transversal et/ou longitudinal déterminée par l'algorithme de guidage de véhicule en fonction des données d'entrée.

2. Procédé selon la revendication 1,
**caractérisé en ce que,**
un algorithme de guidage de véhicule est utilisé, lequel a été entraîné en particulier par défaut sur la base des données d'entraînement décrivant des mouvements du ou d'un véhicule à moteur (1) au sein d'au moins un environnement de navigation de référence.

3. Procédé selon la revendication 1 ou 2,
**caractérisé en ce que,**
un algorithme de guidage de véhicule entraîné conformément à une exigence de conduite à droite ou à gauche est utilisé en matière de prévention de collisions et/ou de la réalisation d'un mouvement du véhicule à moteur (1).

4. Procédé selon l'une quelconque des revendications précédentes,
**caractérisé en ce que,**
le guidage automatique du véhicule à moteur (1) ne démarre qu'après réception d'une action opérateur côté conducteur affichant un souhait de guidage automatique.

5. Procédé selon la revendication 4,
**caractérisé en ce que,**
l'algorithme de guidage de véhicule vérifie pendant son exécution en fonction des données de capteur si la détermination d'une action de guidage transversal et/ou longitudinal future est disponible, et dans le cas d'une disponibilité identifiée, une indication affichant une acceptation pour l'action opérateur est émise à l'attention du conducteur.

6. Procédé selon l'une quelconque des revendications précédentes,
**caractérisé en ce que,**
l'algorithme de guidage de véhicule lors de la détermination de plusieurs possibilités pour une action de guidage transversal et/ou longitudinal future, en particulier pour une décision de direction, sélectionne une possibilité en fonction de l'itinéraire de navigation et/ou d'une action opérateur côté conducteur affichant l'action de guidage transversal et/ou longitudinal souhaitée.

7. Procédé selon l'une quelconque des revendications précédentes,
**caractérisé en ce que,**
le système de navigation exécute un algorithme de prévention de collisions supplémentaire utilisant les données de capteur comme des données d'entrée, celui-ci modifiant et/ou annulant l'action de guidage transversal et/ou longitudinal déterminée du côté de l'algorithme de guidage de véhicule en cas de détection d'une collision imminente du véhicule à moteur (1) avec un obstacle.

8. Procédé selon l'une quelconque des revendications précédentes,
**caractérisé en ce que,**
un système capteur (6) comprenant au moins un capteur fournissant des données brutes est utilisé, dans lequel le au moins un capteur est un capteur à ultrasons (7) et/ou un capteur radar (8) et/ou un capteur laser (9) et/ou une caméra (10) et/ou les données de capteur décrivent un modèle d'environnement du véhicule à moteur (1) dérivé des données brutes.

9. Procédé selon l'une quelconque des revendications précédentes,
**caractérisé en ce que,**
le guidage automatique du véhicule à moteur (1) prend fin lorsque la position de destination est atteinte et/ou lorsqu'une action opérateur côté conducteur affiche un souhait d'achèvement de guidage automatique.

10. Véhicule à moteur comportant un système de navigation (2) conçu pour la réalisation d'un procédé selon l'une quelconque des revendications précédentes.
